# EUROPEAN PATENT APPLICATION

(11) **EP 1 467 526 A1**
(43) Date of publication of application: **13.10.2004**
(21) Application number: 02806082.0
(22) Date of filing: 26.12.2002
(51) Int. Cl.: H04L 12/56, H04L 12/46, H04L 12/28, H04B 7/26

(54) **SUBNET CONNECTION SWITCH COMMUNICATION SYSTEM**

(30) Priority: 28.12.2001 JP 2001401334
(71) Applicant: MATSUSHITA ELECTRIC INDUSTRIAL CO., LTD., Kadoma-shi, Osaka 571-8501 (JP)
(72) Inventor: ARAMAKI, Takashi, Yokohama-shi, Kanagawa 232-0061 (JP); HIRANO, Jun, Yokosuka-shi, Kanagawa 239-0843 (JP)
(74) Representative: Casalonga, Axel
(86) International application number: PCT/JP2002/013637
(87) International publication number: WO 2003/058893

(57) **Abstract**

A system is disclosed which prevents the network congestion occurring when an extremely large number of terminals simultaneously switch subnet connections or an increase in data processing load stemming from the concentration of a large volume of data. In this system, a communicable range of a gate FG 13a and a communicable range of a gate FG 13b, constituting subnets different from each other, are made to overlap with each other so that the connections to the two gates FG can be made in this overlap range. On the other hand, on a mobile body 1 side, a large number of terminals (mobile nodes VMN 23) in the mobile body are grouped. Moreover, when the mobile body exists in the overlap range, the connection is switched from the subnet of the gate FG to the subnet of the other gate while times are staggered with each group 43. In particular, a VLAN 45 is established for each group and the path switching (movement of connection) is made in each VLAN, which facilitates the movement of the subnet to be connected according to group.

## Description

### TECHNICAL FIELD

The present invention relates to, in a communication system in which a plurality of terminals moving with mobile bodies establish connections through radio communications with links in a subnet composed of gates located on the terrestrial side for making connections to an external network, a subnet connection switching communication system for simultaneously changing the connections among links connected to subnets different from each other, and more particularly to a subnet connection switching communication system in a communication system which is capable of delivering contents such as newspaper article from the terrestrial side to a plurality of terminals moving with train, bus, airplane, automobile, ship and the like, or of making connections from terminals existing in mobile bodies to an external network such as the internet.

### BACKGROUND ART

### <First Conventional Technique>

First of all, a description will be given of, as a first conventional technique, a case in which one mobile node MN moves among links. Incidentally, the technique described hereinbelow relates to a technique according to the mobile IPv4, for example, disclosed in IP mobility support, RFC2002, and others.

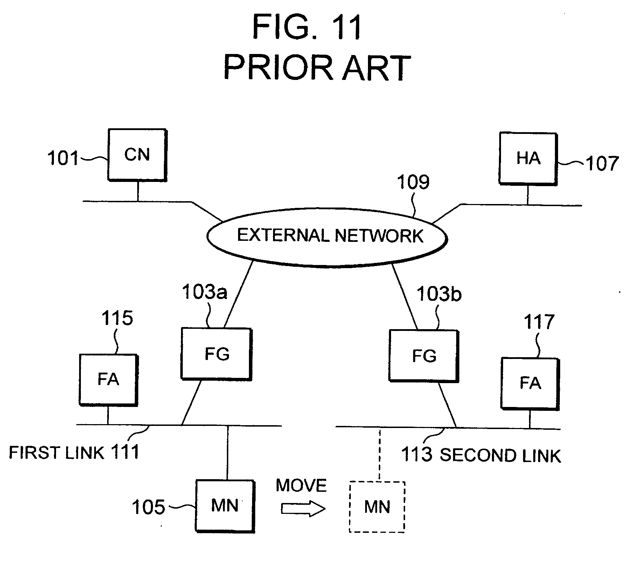

FIG. 11 is an illustrative view for explaining the first conventional technique. To an external network 109, there are independently connected a communication party CN (Correspondent Node) 101, gates FG (Foreign Gate) 103a and 103b having different subnets, and a home agent HA (Home Agent) 107 made to manage an IP address of a mobile node MN (Mobile Node) 105. A description will be given of a case in which, in the aforesaid configuration, the mobile node MN 105 shifts the connection between links existing in lower order with respect to the gates 103a, 103b and having subnets different from each other.

To the mobile node MN 105, there is assigned a unique IP address (home address) which does not undergo the change irrespective of the movement between links. The home address for specifying the mobile node MN 105 is assigned and managed by the home agent HA 107 corresponding to this mobile node MN 105. The home agent HA 107 supports the communications when the mobile node MN 105 is connected to an external link (forward link different from a home link to which a home agent pertains). In this connection, in general, in the home address of the mobile node MN 105 to be managed by the home agent HA 107, there is set the same prefix as that of a home link to which this home agent HA 107 pertains.

A description will be given of a case in which the mobile node MN 105 moves between links. In this specification, a link with which a moving terminal is in connection before the movement will be referred to as a first link, while a link with which it comes into connection after the movement will be referred to as a second link. In the first link 111 and the second link 113, there exist foreign agents FA (Foreign Agent) 115 and 117 which carry out the assignment and management of a stay-in address COA (Care of Address) therein. In FIG. 11, when moving from the first link 111 to the second link 113, in the second link 113 which is a new destination, the mobile node MN 105 acquires the stay-in address COA having a prefix of the second link 113. That is, to the mobile node MN 105, in addition to the unchangeable home address, there is assigned the stay-in address COA acquired in the second link 113.

After connected to the second link 113 to acquire a new stay-in address COA, the mobile node MN 105 transmits, to the home agent HA 107, a binding update for notifying the stay-in address COA forming position information on the new residence and a home address notification message for notifying the home address of the mobile node MN 105. Through this processing, the home address of the mobile node MN 105 and the new stay-in address COA acquired in the second link 113 are notified from the mobile node MN 105 to the home agent HA 107.

Upon receipt of the binding update and the home address notification message from the mobile node MN 105, the home agent HA 107 registers the home address of the mobile node MN 105 and the stay-in address COA thereof as an entry in a binding cache having a function to retain a set of the home address and the stay-in address COA.

Through the above-mentioned processing, the position information on the mobile node MN 105 is stored in the home agent HA 107 so that the home agent HA 107 can specify the position information (stay-in address COA in the second link 113) on the destination of the mobile node MN 105 by seeing the information registered in the binding cache.

For example, in a case in which the home agent HA 107 receives a packet delivered to the home link and addressed to the home address of the mobile node MN 105, the home agent HA 107 encapsulates the packet through the use of a header addressed to the stay-in address COA of the mobile node MN 105 by referring to the binding cache, thereby enabling the transmission (tunnel) to the stay-in address COA of the mobile node MN 105.

Moreover, the mobile node MN 105 is also capable of transmitting the binding update and the home address notification message to the communication party CN 101. Upon receipt of the binding update and the home address notification message, the communication party CN 101 registers a set of the home address of the mobile node MN 105 and the stay-in address COA as an entry in the binding cache as well as the home agent HA 107, thereby enabling the direct transmission of the packet from the communication party CN 101 to the stay-in address COA of the mobile node MN 105.

### <Second Conventional Technique>

Secondly, a description will be given of, as a second conventional technique, a case in which a mobile router MR having an internal network (mobile network) in lower order moves between links. The technique to be described hereinbelow has been written in the internet draft (http://www. ietf.org/internet-drafts/drafts-ernst-mobileip-v6-network-02.txt) opened to the public on the Web site of IETF.

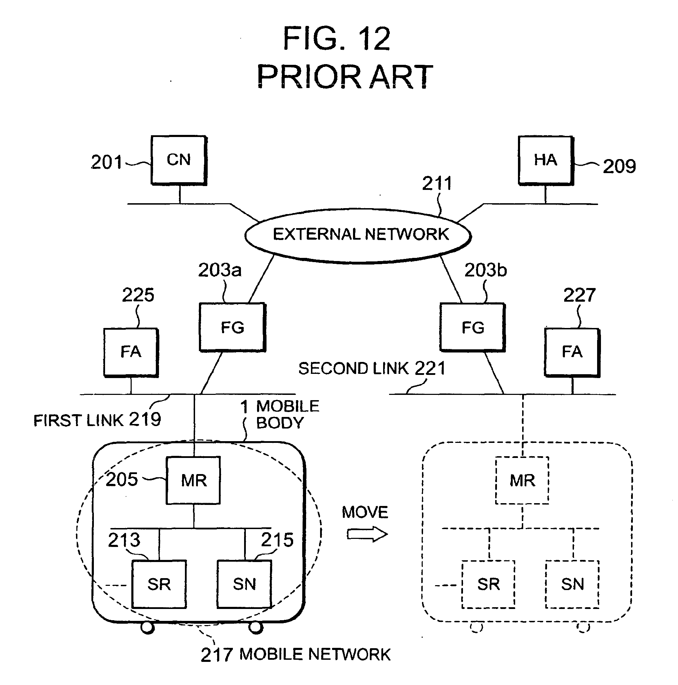

FIG. 12 is an illustrative view for explaining a second conventional technique. To an external network 211, there are independently connected a communication party CN 201, gates FG 203a and 203b of two links connected to different subnets, and a home agent HA 209 made to manage IP addresses of a mobile router MR 205 and a mobile network 217 residing in lower order with respect to the mobile router MR 205. A description will be given of a case in which the mobile router MR 205 in the interior of a mobile body 1 shifts the connection between links connected to subnets composed of the gates 203a and 203b, respectively.

An internal link exists in lower order with respect to the mobile router MR 205, and a large number of fixed routers SR 213 and a fixed node SN 215 are connected to the internal link to form one mobile network 217. The mobile router MR 205, the fixed routers ER 213 and the fixed node SN 215 always move with the mobile body. That is, the fixed routers SR 213 and the fixed node SN 215 are fixed relatively to the mobile router MR 205 and always reside in the interior of the mobile network 217.

In the internet draft (http://www. ietf.org/internet-drafts/draft-ernst-mobileip-v6-network-02.txt) opened to the public on the Web site of IETF, as mentioned above, there has been disclosed a technique about a case in which a mobile router MR having a mobile network moves between links.

When the mobile router MR 205 having the mobile network 217 moves between links (in FIG. 12, the movement from a first link 219 to a second link 221), the mobile router MR 205 acquires a stay-in address COA having a prefix of the second link 221 in the second link 221 which is a new destination. In the first link 219 and the second link 221, foreign agents FA 225 and 227 exist for assigning and managing the stay-in address COA in each of the links.

Moreover, the mobile router MR 205, which has acquired a new stay-in address COA when connected to the second link 221, transmits, to the home agent HA 209, the binding update for notifying the stay-in address COA forming the position information on the new destination and the home address notification message for notifying the home address of the mobile router MR 205 as well as the above-mentioned first conventional technique, and further transmits a mobile network prefix suboption in which the prefix of the mobile network 217 is written.

Through this processing, the home address of the mobile router MR 205, the new stay-in address COA acquired in the second link 221 and the prefix for specifying the mobile network 217 existing in lower order with respect to the mobile router MR 205 are notified from the mobile router MR 205 to the home agent HA 209.

The home agent HA 209 registers the home address of the mobile router MR 205 and the stay-in address COA thereof as an entry in the binding cache and, likewise, registers a set of the prefix of the mobile network 217 and the stay-in address COA as an entry in the binding cache.

Through the aforesaid processing, the position information on the mobile router MR 205 and the mobile network 217 are stored in the home agent HA 209. The home agent HA 209 can specify the position information (the stay-in address COA in the second link 221) on the destination of the mobile router MR 205 by seeing the information registered in the bonding cache, and can transmit, to the mobile network 217, a packet addressed to the fixed router SR 213 or the fixed node 215 pertaining to the mobile network 217 retained in the mobile router MR 205 by seeing the prefix of the mobile network 217 registered in the binding cache.

In addition, Japanese Patent Laid-Open No. HEI 9-172451 discloses a technique in which, when the mobile router MR 205 moves between links, a net mask for specifying the home address of the mobile router MR 205 and each of nodes in the mobile network 217 is transmitted from the mobile router MR 205 to the home agent HA 209. Also according to this technique, the mobile router MR 205 and the mobile network 217 become movable between links different from each other.

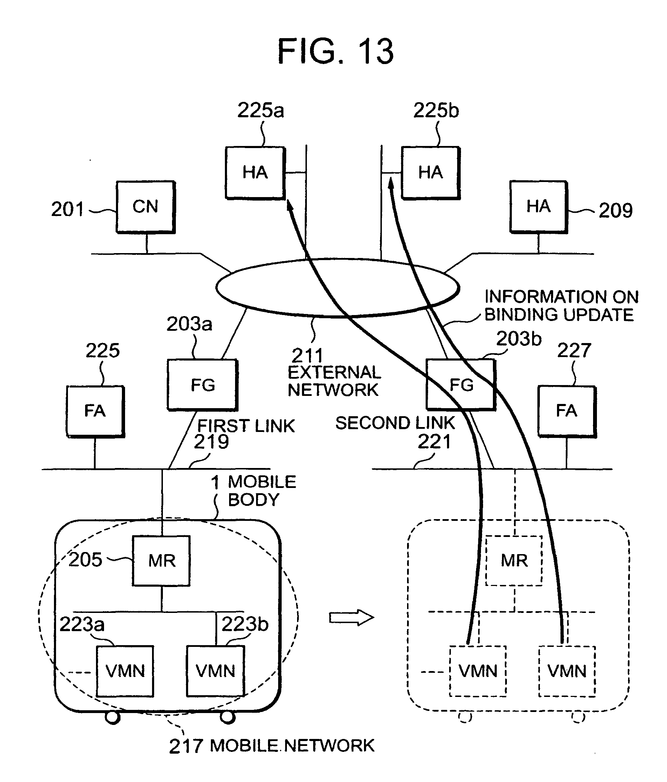

FIG. 13 is an illustration of a configuration according to the present invention, and is an illustrative view for explaining the problems occurring in the first and second conventional techniques. In addition to the configuration shown in FIG. 12, FIG. 13 shows a configuration in which a plurality of mobile nodes VMN (Visiting Mobile Node) 223 are connected to a mobile network 217. In this connection, unlike the fixed router SR 213 and the fixed node SN 215 (not shown in FIG. 13) shown in FIG. 12, the mobile node VMN 223 can join or break away from the mobile network 217 through the getting-on-and-off of a user retaining the mobile node VMN 223 or the power-ON/OFF thereof.

Moreover, home agents HA 225 for managing the home addresses of the respective mobile nodes VMN 223 are different from each other. That is, the home agent HA 225 corresponding to each of the plurality of mobile nodes VMN 223 resides on an external network 211 in a state dispersed. In the illustration, for the purpose of clearly showing the dispersed existence of the home agents HA 225 respectively corresponding to the plurality of mobile nodes VMN 223 on the external network, the same mark a, b ··· is added to the end of each of the mobile nodes VMN 223 and the corresponding one of the home agents HA 225.

In a case in which the mobile router MR 205 moves between links, the mobile node VMN 223 directly or indirectly detects the movement between the links and acquires a new stay-in address COA from the second link 221. In addition, as in the case of the first conventional technique, there is a need for each of the mobile nodes VMN 223 to transmit, to the corresponding home agent HA 225, a binding update for notifying the stay-in address COA forming the position information on.the new destination and a home address notification message for notifying the home address of the mobile node VMN 223.

However, for example, in a case in which the mobile body is a body, such as train, bus, airplane, automobile or ship, which transports an extremely large number of passengers at a time, an extremely large number of mobile nodes VMN including portable terminals of the passengers are connected to the interior of a mobile network. In a case in which a mobile network moves between links in a situation where an extremely large number of mobile nodes VMN exist in the mobile network, according to the first conventional technique, the information on the binding update such as the binding update and the home address notification message are simultaneously transmitted from all the mobile nodes VMN to the home agents HA respectively corresponding to the mobile nodes VMN. In addition, there may be a case in which the information on the binding update is transmitted from the mobile node VMN to the communication party CN. Thus, in the case of the simultaneous transmission of the information on the binding update, the load on the network noticeably increases temporarily, which creates a problem in that the congestion in the network occurs.

Furthermore, also in a case in which the mobile router MR transmits the information on the mobile network as described in the second conventional technique, an analogous problem occurs. With respect to the fixed router SR or the fixed node SN existing in the mobile network shown in FIG. 12, a mobile network prefix suboption describing the prefix of the mobile network is transmitted from the mobile router MR residing in a higher order and, hence, the information on the binding update is not transmitted from the individual fixed router SR or fixed node SN, so that the network congestion does not occur.

However, the home agent HA for the mobile node VMN is different from the mobile router MR or the home agent HA of the mobile network and, if the home agent HA is not duplicated, as shown in FIG. 13, the corresponding home agents equal in number to the mobile nodes VMN exist in a state dispersed.

Accordingly, in a case in which a mobile network having an extremely large number of mobile nodes VMN moves between links, the information on the binding update such as the binding update and the home address notification message are simultaneously transmitted from all the mobile nodes VMN to the home agents HA respectively corresponding thereto. In addition, there may be a case in which the information on the binding update is transmitted from the mobile node VMN to the communication party. Thus, also in the second conventional technique, in the case of the simultaneous transmission of the information on the binding update, the load on the network noticeably increases temporarily, which creates a problem in that the congestion in the network occurs.

Still furthermore, as done in the second conventional technique, it is considered that the mobile network prefix suboption describing the prefix of the mobile network in which the mobile node VMN exists or the stay-in address of the mobile router MR and the net mask is transmitted from the mobile router MR to the home agent HA for each of the mobile nodes VMN. However, in a case in which an extremely large number of mobile nodes VMN exist in the mobile network, there is a need to carry out the notification on the movement to an extremely large number of home agents HA corresponding to all the mobile nodes VMN. Therefore, the problem on the network congestion sill remains.

### DISCLOSURE OF THE INVENTION

The prevent invention has been developed in consideration of the above-mentioned problems, and it is an object of the invention to provide a subnet connection switching communication system capable of preventing the network congestion occurring when an extremely large number of terminals simultaneously switch subnet connection, or an increase in data processing load stemming from the concentration of a large volume of data.

For achieving the aforesaid purpose, according to the present invention, when the connection of a plurality of terminals is switched from one gate constituting a subnet to the other gate constituting a subnet different from the first-mentioned subnet, the plurality of terminals are grouped into a plurality of groups and, for the communication, the connection is switched while times are staggered on a group basis.

With this arrangement, the traffic in a network at the switching of a subnet can be dispersed with time and, even in a case in which an extremely large number of terminals simultaneously switch the subnet connection, the network congestion or the increase in data processing load stemming from the concentration of a large volume of data is preventable.

In addition, according to the present invention, the grouping is conducted by a VLAN, and the transmission of a connection switching instruction is made according to group through the use of a function of the VLAN.

With this arrangement, the terminals being an object of broadcast can definitely be grouped and the switching of the subnet connection path can be facilitated according to group.

Still additionally, according to the present invention, an overlap range is provided where a communicable range connectable to one gate and a communicable range connectable to the other gate overlap with each other, and all the connections of a plurality of terminals are switched within a time period in which the plurality of terminals exist in the overlap range.

With this arrangement, in the overlap range, the connection to both the one gate and other gate becomes feasible, and the switching of the subnet connection from the one gate to the other gate can be made in no time.

Yet additionally, according to the present invention, the plurality of terminals are located in the mobile body to move with the mobile body.

With this arrangement, for example, even in a case in which an extremely large number of terminals exist in a mobile body such as train, bus, airplane, automobile or ship, the switching of the subnet connection becomes feasible.

Moreover, according to the present invention, a mobile body includes external communication means for making communication with one gate or the other gate and internal communication means for making communications with a plurality of terminals, with the plurality of terminals being connected through the external communication means and the internal communication means to the one gate or the other gate.

This arrangement can facilitate the communication management of a plurality of terminals existing in a mobile body and the switching management of the subnet connections.

Still moreover, according to the present invention, in a case in which the mobile body is a train including a plurality of cars, a plurality of terminals located in at least one of the plurality of cars are set as one group, and the grouping is made in units of car.

This arrangement can facilitate the grouping of a plurality of terminals in a mobile body such as a train comprising a plurality of cars, and can set a plurality of terminals as one group in units of car.

### BRIEF DESCRIPTION OF THE DRAWINGS

FIG. 1 is an illustrative view showing a state before a mobile body according to the present invention moves between links,
FIG. 2 is an illustrative view showing a state while the mobile body according to the present invention is in movement between links,
FIG. 3 is an illustrative view showing a state after the mobile body according to the present invention moves between links,
FIG. 4 is an enlarged view of a portion indicated by a dotted line in FIG. 1, and is an illustrative view showing a detailed configuration before the mobile body moves between links,
FIG. 5 is an enlarged view of a portion indicated by a dotted line in FIG. 2, and is an illustrative view showing a detailed configuration while the mobile body is in movement between links,
FIG. 6 is an enlarged view of a portion indicated by a dotted line in FIG. 3, and is an illustrative view showing a detailed configuration after the mobile body moves between links,
FIG. 7A is an illustrative view showing communicable ranges of two links different from each other according to the present invention, and is an illustrative view showing a state in which an overlap range 37 connectable to two different subnets is provided on an orbit,
FIG. 7B is an illustrative view showing communicable ranges of two links different from each other according to the present invention, and shows a configuration in which cells of two base stations BS respectively connected to links different in subnet from each other overlap with each other,
FIG. 7C is an illustrative view showing communicable ranges of two links different from each other according to the present invention, and shows a configuration in which one base station BS is connectable to two links different in subnet from each other,
FIG. 8 is an illustrative view showing one example of connection a mobile body side and a terrestrial side according to the present invention,
FIG. 9 is an illustrative view showing a case in which a mobile body according to the present invention is a train including a plurality of cars and the grouping is made according to car,
FIG. 10 is an illustrative view showing a case in.which a mobile body according to the present invention retains a plurality of mobile routers MR,
FIG. 11 is an illustrative view for explaining a first conventional technique,
FIG. 12 is an illustrative view for explaining a first conventional technique, and
FIG. 13 is an illustration of a configuration according to the present invention, and is an illustrative view for explaining problems of the first and second conventional techniques.

### BEST MODE FOR CARRYING OUT THE INVENTION

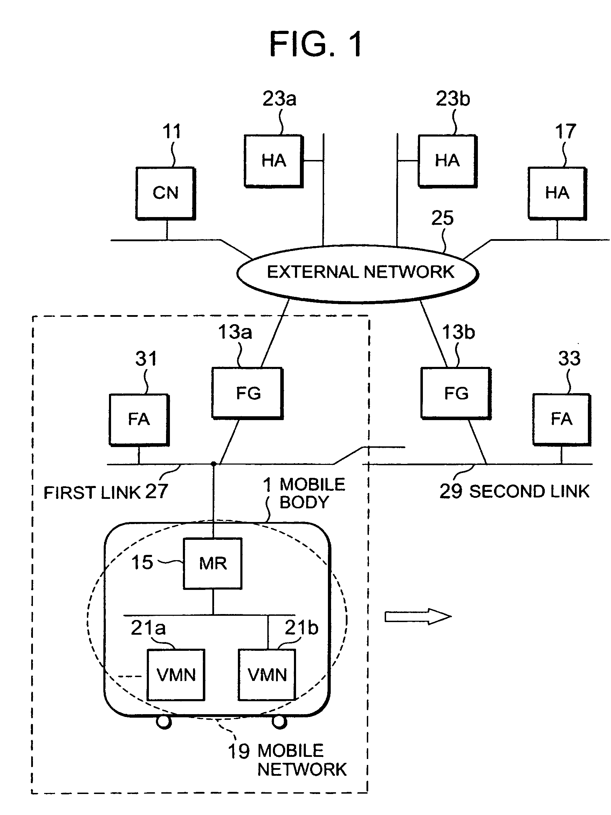

Referring to the drawings, a description will be given hereinbelow of an embodiment of a subnet connection switching communication system according to the present invention. FIGs. 1 to 3 are illustrative views showing states before a mobile body moves between links, while in movement and after the movement. To an external network 25, there are independently connected a communication party CN 11, gates FG 13a and 13b respectively constituting different subnets, a home agent HA 17 made to manage IP addresses of a mobile router MR 15 and an unshown fixed router SR or fixed node SN connected in lower order with respect to the mobile router MR 15, and a home agent HA 23 for a mobile node VMN (terminal) 21 joining a mobile network 19.

An extremely large number of mobile nodes VMN 21 exist in a mobile body 1, and the home agents HA 23a, b ··· corresponding to the respective mobile nodes VMN 21a, b ··· are connected to the external network 25 in a state dispersed. For clear description only, the sign of the home agent HA 17 corresponding to the mobile router MR 15 or the mobile network is exactly discriminated from the signs of the home agents HA 23a, b corresponding to the mobile nodes VMN 21a, b ···.

In addition, a first link 27 to which the mobile body is connected before the movement exists in lower order with respect to the gate FG 13a, and a second link 29 to which the mobile body is connected after the movement exists in lower order with respect to the gate FG 13b. These links are connected to different subnets composed of the gates FG 13a and 13b, respectively. Still additionally, in the respective links, foreign agents FA 31 and 33 exist to carry out the assignment or management of stay-in address COA.

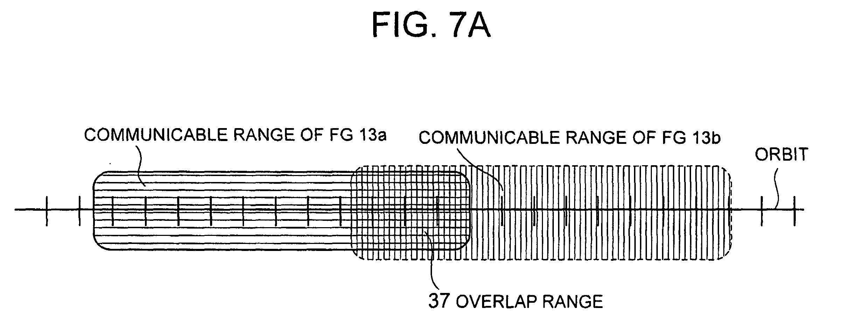

First, referring to FIGs. 7A to 7C, a description will be given of a configuration in a terrestrial side. FIGs. 7A to 7C are illustrative views showing communicable ranges of two links different from each other according to the present invention. The external network 25 and the foreign agents FA 31 and 33 are omitted from the illustration. Also as shown in FIGs. 1 to 3, to each of the gates FG 13a and 13b there is connected a base station BS (Base Station) 35 capable of making radio communications, and an radio wave is radiated from this base station BS 35, thereby establishing a predetermined cell (communicable range) on an orbit of the mobile body 1. When needed for the description, the base station 35a is used as a sign for the base station 35 connected to the first link, while the base station 35b is used as a sign to the base station 35 connected to the second link.

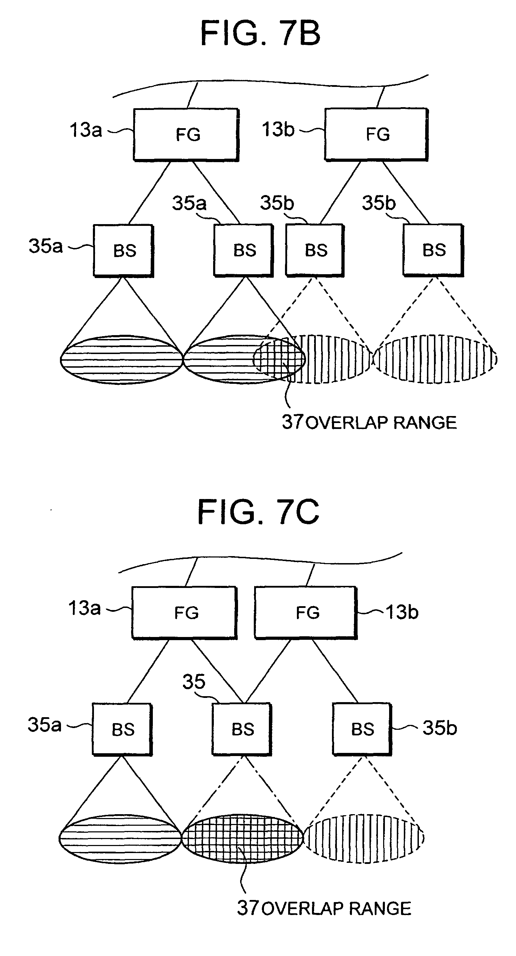

In the present invention, as shown in FIG. 7A, an overlap range 37 is provided where the mobile body 1 moving on the orbit is connectable to two subnets different from each other. For example, as shown in FIG. 7B, the base stations BS 35a and 35b are disposed so that the cells of the base stations BS 35 and 35b connected to links different in subnet from each other overlap with each other.

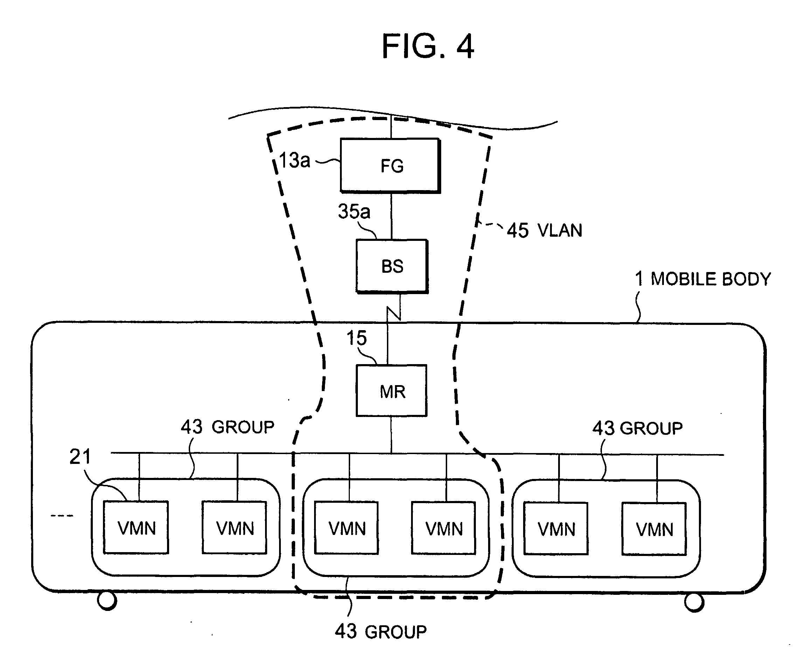

Therefore, in the interior of the overlap range 37, the mobile body 1 becomes connectable to two links (first link 27 and second link 29) different in subnet from each other and existing independently in lower order with respect to the two gates FG 13a and 13b, respectively. A configuration including the base station BS 35 will be described in detail later with reference to FIGs. 4 to 6.

Moreover, for example, as shown in FIG. 7C, for a configuration in which one base station BS 35 is connectable to two links different in subnet from each other, in the cell defined by this base station BS 35, the mobile body 1 can also be made to be simultaneously connectable to two subnets different from each other.

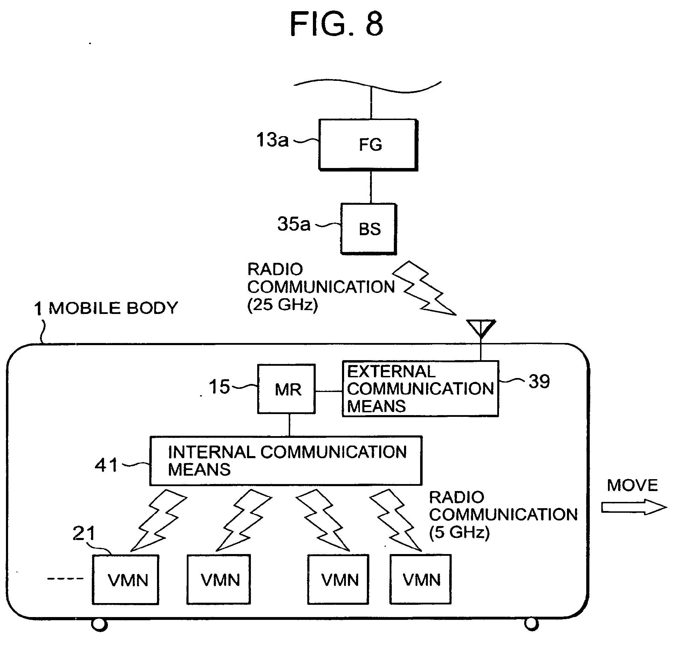

Secondly, a description will be given of the connection between the mobile node VMN 21 and the terrestrial side. FIG. 8 is an illustrative view showing one example of the connection between the mobile body side and the terrestrial side according to the present invention. As one example, FIG. 8 shows a state of the connection with the gate FG 13a, and the external network 25 and the foreign agent FA 31 are omitted from the illustration. The mobile body 1 is equipped with an external communication means 39 and an internal communication means 41. For example, in the interior of the mobile body 1, the mobile node VMN 21 and the internal communication means 41 are connectable with each other through 5-GHz radio communication while, on the mobile body 1 side and the terrestrial side, the external communication means 39 of the mobile body 1 and the terrestrial side base station BS 35 are connectable with each other through 25-GHz radio communication.

Thus, through the repeating by the external communication means 39 and the internal communication means 41, the mobile node VMN 21 is connectable to the terrestrial side base station BS 35 and the gates FG 13a and 13b and further connectable to the external network 25. Incidentally, the communication mode or frequency band to be used for the communications is not particularly limited, and it is also possible to employ a mode in which the mobile node VMN 21 directly makes communication with the base station BS 35 for the connection.

Furthermore, referring to FIGs. 1 to 6, a detailed description will be given of the connection between the mobile node VMN 21 in the mobile body 1 and the terrestrial side. First, The description starts at a connection state before the movement between links. FIG. 1 is an illustrative view showing a state before a mobile body according to the present invention moves between links, and FIG. 4 is an enlarged illustration of a portion indicated by a dotted line in FIG. 1 and is an illustrative view showing a detailed configuration before the mobile body moves between the links. In this connection, the numerous mobile nodes VMN 21 residing in the mobile body 1 is mutually connectable through the mobile router MR 15, the base station BS 35a constituting the first link (link connected before the movement) 27 and the gate FG 13a to the external network 25.

In the present invention, the numerous mobile nodes VMN 21 in the mobile body 1 are grouped (subdividing a subnet in a train to form pico-nets) to produce a VLAN including, as components, a plurality of mobile nodes VMN 21 of each subdivided group 43, the mobile router MR 15, and the base station BS 35 and the gate FG 13a. For convenience only, only the VLAN 45 involving one group 43 is shown in FIG. 4. Accordingly, a different VLAN 45 is formed with each group 43, and the mobile nodes VMN 21 in a different group 43 pertain to a different VLAN 45. Incidentally, the number of groups 43 and the number of mobile nodes VMN 21 in each group 43 can be determined at its option.

Owing to the VLAN 45 being formed with each group 43 in this way, the mobile node VMN 21 can be selected as an object of broadcast for each group 43. As will be described hereinbelow, at the movement between links, through the use of the grouping of the mobile nodes VMN 21 into the VLAN 45, the movement from the first link 27 to the second link 29 is made while times are staggered according to group 43.

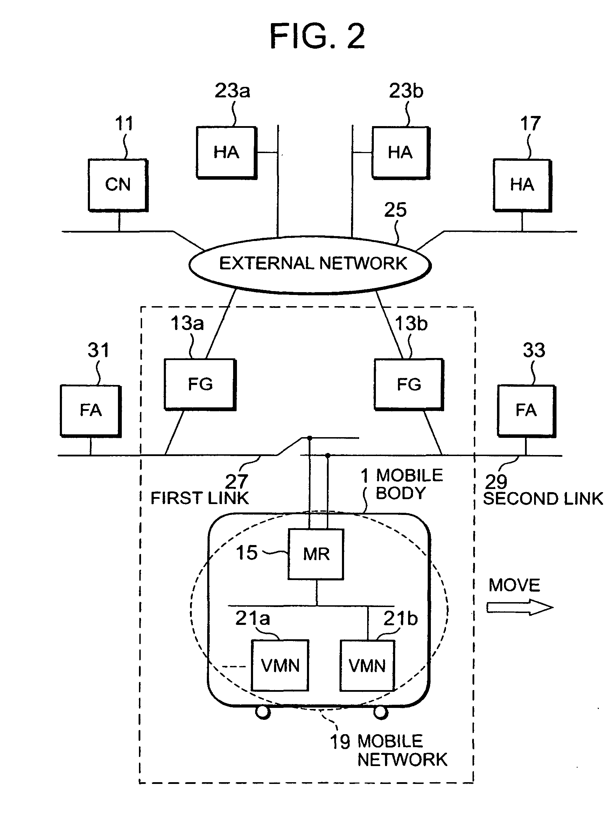

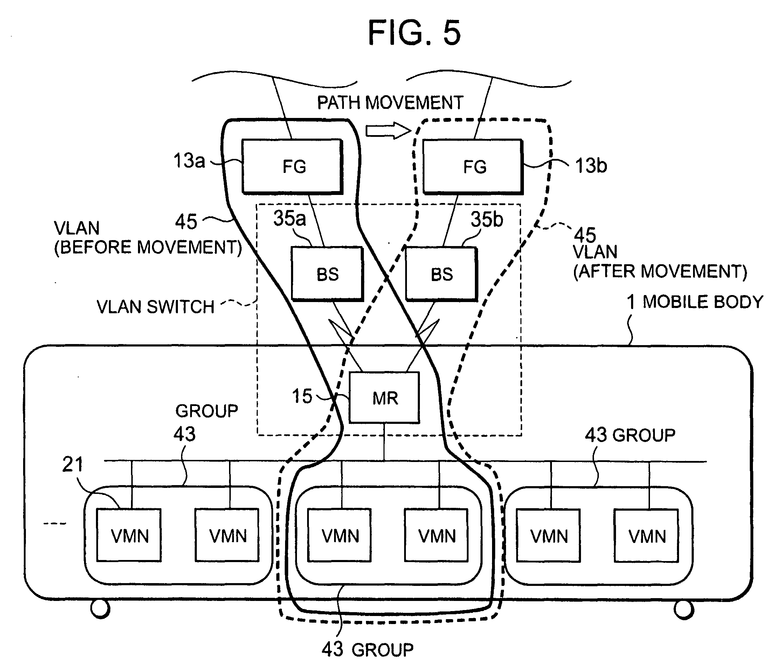

Still furthermore, referring to FIGs. 2 and 5, a description will be given of the processing while in movement between links. FIG. 2 is an illustrative view showing a state while the mobile body according to the present invention is moving between links. As an example, the following description will be given of a case in which the terrestrial side configuration is as shown in FIG. 7B. Because of the terrestrial side configuration mentioned above, the cell (communicable range) of the base station BS 35a connected to the gate FG 13a and the cell (communicable range) of the base station 35b connected to the gate FG 13b overlap with each other so that overlap ranges 37 develop as shown in FIGs. 7A to 7C. Therefore, when the mobile body 1 enters in the overlap range 37, as shown in FIG. 2, the mobile router MR 15 is simultaneously connectable through the radio communication to both the first link 27 and second link 29.

FIG. 5 is an enlarged view showing a portion indicated by a dotted line in FIG. 2, and is an illustrative view showing a detailed configuration in a state while a mobile body is in movement between links. On the terrestrial side, the base station BS 35a connected to the gate FG 13a constitutes the first link 27, while the base station BS 35b connected to the gate FG 13b forms the second link 29. Since the base stations BS 35a and 35b are disposed so that the cell (communicable range) of the base station BS 35a connected to the gate FG 13a and the cell (communicable range) of the base station BS 35b connected to the gate FG 13b overlap with each other, the mobile router MR 15 is simultaneously communicable with both the base station BS 35a of the first link 27 and the base station BS 35b of the second link 29.

In a state where the mobile router MR 15 is communicable with both the base stations BS 35a and 35b of the different links, the mobile router MR 15, the base station BS 35a of the first link 27 and the base station BS 35b of the second link constitute a VLAN switch, and the mobile router MR 15 is made to switch a path (accessible path) between the base station BS 35a of the first link 27 and the base station BS 35b of the second link 29.

For example, the concrete path switching (hand-over) between the base stations BS 35a and 35b belonging to different links is made as follows. In a case in which the mobile body 1 gets in the overlap range 37 of the cells (communicable ranges) of the two base stations BS 35a and 35b, for example, information such as RA (router notification : Router Advertisement) for notifying a prefix of the second link 29 is sent to the interior of a predetermined VLAN 45 to give an instruction to the mobile node VMN in the predetermined VLAN 45 for switching the path from the first link 27 to the second link 29.

Through the function of the VLAN 45 whereby, when information is sent to one VLAN 45, only a terminal pertaining to this VLAN 45 can receive it, the path switching instruction sent to a predetermined VLAN 45 is received and processed by the mobile node VMN 21 pertaining to this predetermined VLAN. In consequence, with respect to only the mobile node VMN 21 pertaining to the predetermined VLAN 45 receiving the path switching instruction, the path switching is made from the first link 27 to the second link 29.

In addition, as well as the conventional technique, each of the path-switched mobile nodes VMN 21 notifies the information on the binding update representative of the connection to the second link being a destination to the home agent HA 23 corresponding to each of the mobile nodes VMN 21. In consequence, only the mobile node VMN 21 pertaining to the predetermined VLAN 45 to which the path switching is sent can switch the connection from the first link 27 to the second link 29, and can change the subnet to which the mobile node VMN 21 pertains.

Still additionally, the subnet in the mobile body 1 is subdivided in advance and a plurality of groups 43 to which the mobile nodes VMN 21 pertain exist in the mobile body 1 and, hence, the VLAN 45 is formed with each of the plurality of groups 43. With respect to each of the plurality of VLANs 45 thus formed (that is, with respect to each subdivided group 43), the path switching instructions are successively sent out while staggering times so that the path switching timing is shifted group 43 by group 43. As a result, the sending of the information on the binding update can be dispersed with time because the sending timing of the information on the binding update is shifted on a group 43 basis, which can prevent the network congestion or an increase in data processing load stemming from the concentration of a large volume of data even in a case in which a large number of mobile nodes VMN 21 simultaneously move between links.

Incidentally, for convenience only, although only the VLAN 45 carrying out the path change is shown in FIG. 5, the mobile node VMN 21 (that is, the mobile node VMN 21 pertaining to the VLAN 45 when the path switching instruction is not sent out thereto yet) connected to the first link 27 and the mobile node VMN 21 (that is, the mobile node VMN 21 pertaining to the VLAN 45 to which the path switching instruction has already been sent out) connected to the second link 29 coexist while in movement between links.

Yet additionally, with respect to each of the groups 43 produced according to VLAN 45, the path switching is made in succession, and with all the groups 43 (that is, with respect to all the mobile nodes VMN 21), the path switching and the registration in the home agent HA 23 corresponding to each of the mobile nodes VMN 21 are made, before the movement from the first link 27 to the second link 29 reaches completion.

As described above, since the movement between links is made while staggering times with each group 43, in carrying out the binding update or the like, it is possible to disperse, with time, the increase in traffic due to the information sent into the network. In this connection, there is a need to switch the paths on all the groups 43 from the first link 27 to the second link 29 within the overlap range 37 connectable to both the first link 27 and second link 29 and to set a time interval for moving the path by turns for each group 43 in consideration of the distance of the overlap range 37 in an orbit direction, the speed of the mobile body 1 and the total number of groups 43.

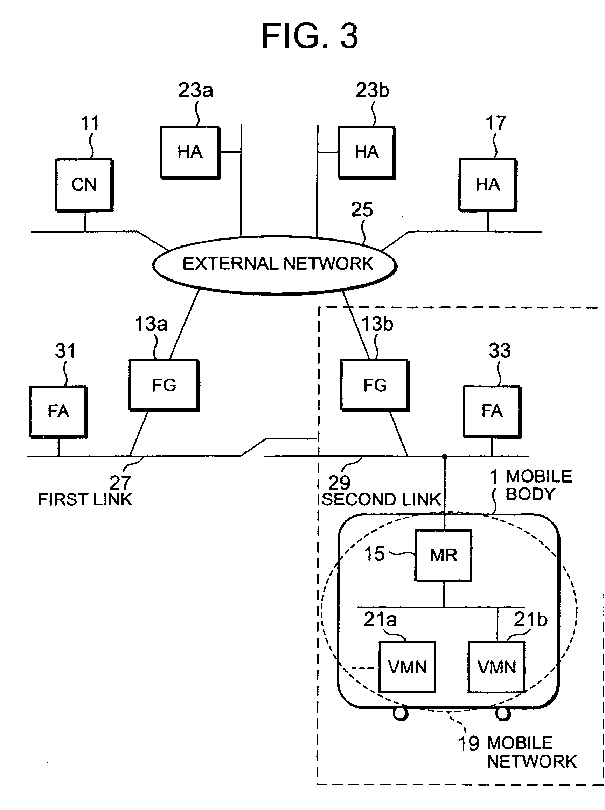

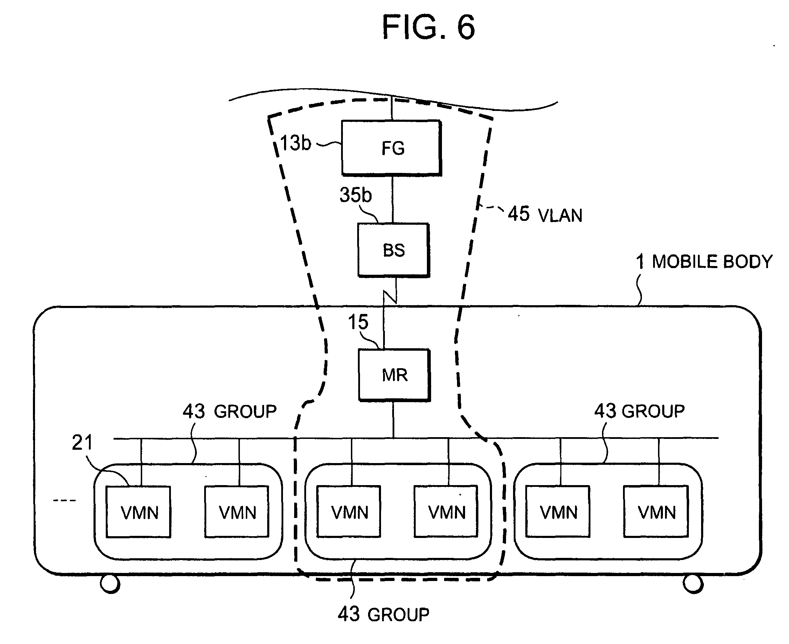

Furthermore, a description will be given of a connection state after the movement between links. FIG. 3 is an illustrative view showing a state after a mobile body according to the present invention has moved between the links, and FIG. 6 is an enlarged view showing a portion indicated by a dotted line in FIG. 3, and is an illustrative view showing a detailed configuration in the state after the mobile body has moved between the links. After the movement between the links, the same connection state as that before the movement is again taken in the second link 29.

That is, the numerous mobile nodes VMN 21 existing in the mobile body 1 is mutually connectable through the mobile router MR 15, the base station BS 35b constituting the second link (link connected after the movement) 29 and the gate FG 13b to the external network 25. Moreover, even in the case of further movement to a different link, according to the same movement method as that mentioned above, the movement becomes feasible while preventing the network congestion.

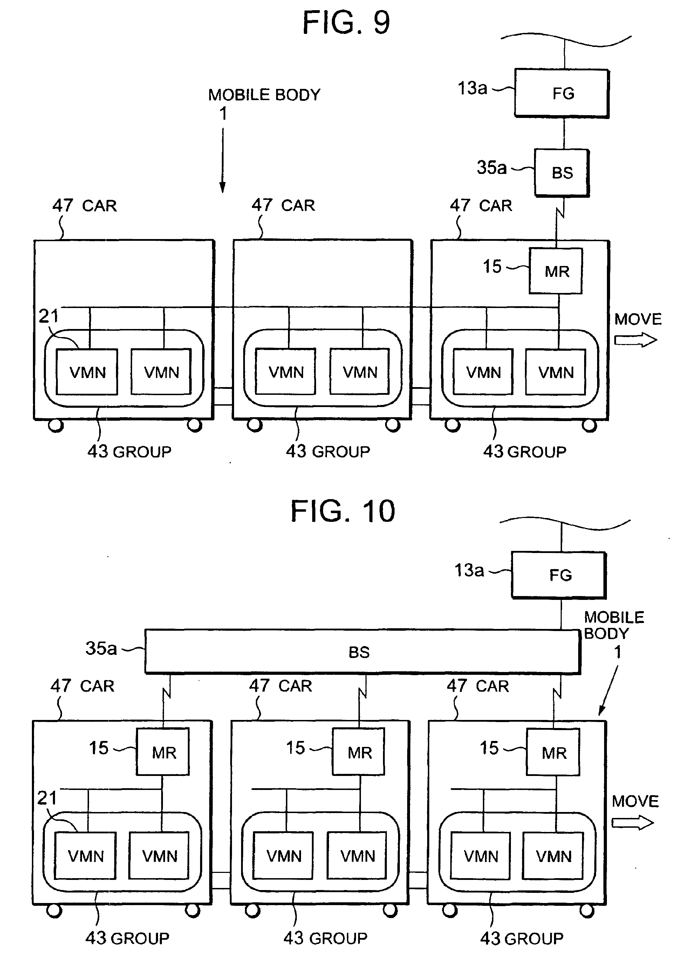

Still furthermore, FIG. 9 is an illustrative view showing a case in which a mobile body according to the present invention is a train including a plurality of cars and the grouping is made according to car. For example, in a case in which the mobile body 1 is a train composed of a plurality of cars 47, it is possible that the subnet in the train is subdivided car 47 by car 47 and a plurality of mobile nodes VMN 21 existing one car 47 are set as one group 43 so that a VLAN 45 is produced for each group 43.

Yet furthermore, FIG. 10 is an illustrative view showing a case in which a mobile body according to the present invention retains a plurality of mobile routers MR. For example, it is also possible that a mobile router MR 15 and an external communication means 39 (not shown in FIG. 10) are placed in each of the cars 47 so that the grouping is made with respect to each mobile router MR 15 to establish a VLAN 45. In FIG. 10, although the grouping is made on the basis of each car 47, it is also acceptable that grouping is made in units of cars and two or more cars of the plurality of cars are handled as a group. Also in the aforesaid configurations shown in FIGs. 9 and 10, the path movement can be made with respect to each of the VLANs 45 including the mobile nodes VMN grouped while staggering times.

Moreover, it can also be considered that a mobile node VMN 21 joins the mobile network 19, such as a case in which a user having the mobile node VMN 21 gets in the mobile body 1 or a case in which the power supply of the mobile node VMN 21 is turned ON while the mobile body 1 is in movement. In this case, the mobile node VMN 21 newly joining the mobile network 19 first acquires the stay-in address COA from the link to which the mobile router MR 15 is connected and transmits the information on the binding update to the home agent HA 23 corresponding to this mobile node VMN 21.

In addition to this, the mobile node VMN 21 newly joining the mobile network 19 joins any one of a plurality of groups 43 subdivided in the mobile body 1 or joins a new group 43. Therefore, the newly joining mobile node VMN 21 also comes into a state pertaining to one of the plurality of groups 43 existing in the mobile body 1 and, hence, can carryout the path change without omission at the movement for each group 43 along with the movement between the links.

Still moreover, it is also conceivable that the mobile node VMN 21 moves within the mobile body 1. In this case, there is a need to change the group to which the mobile node VMN 21 belongs. In particular, for example, in a case in which the group 43 to which the mobile node VMN 21 is to pertain is determined by the place in which the mobile node VMN 21 exists, such as in the case of the grouping with each car 47 or the like, there is a need to change the group 43 to which the mobile node VMN moving between the cars 47 belongs. Accordingly, when it is necessary to change the group 43 to which the mobile node VMN 21 pertains, that is, the VLAN 45 to which the mobile node VMN 21 pertains, the processing is conducted quickly so that the mobile node VMN 21 pertains to any one of the groups 43 at all times, thereby enabling the path change without omission at the movement with each group 43 along with the aforesaid inter-link movement.

Incidentally, although the description of the embodiment has been given on the basis of the mobile IPv4 technique, the present invention is also applicable to the mobile IPv6. In the mobile IPv6, since the function of a foreign agent is incorporated into all of routers, when the present invention is applied to the mobile IPv6, for example, the gates FG 13a and 13b function as the foreign agents FA 31 and 33.

### INDUSTRIAL APPLICABILITY

As described above, according to the present invention, when the connection of a plurality..of terminals is switched from one gate constituting a subnet to the other gate constituting a subnet different from the first-mentioned subnet, the plurality of terminals are grouped into a plurality of groups and the connection is switched while times are staggered with each group. Therefore, the traffic in a network at the switching of a subnet can be dispersed with time and, even in a case in which an extremely large number of terminals simultaneously switch the subnet connection, the network congestion or the increase in data processing load stemming from the concentration of a large volume of data is preventable.

## Claims

1. A subnet connection switching communication system made to switch connections of a plurality of terminals from one gate constituting a subnet to the other gate constituting a subnet different from said subnet for making communications, said plurality of terminals being grouped into a plurality of groups and the connections are switched while times are staggered said group by said group.

2. The subnet connection switching communication system according to claim 1, wherein the grouping is conducted by a VLAN, and an instruction for the connection switching is sent for said each group through the use of a function of said VLAN.

3. The subnet connection switching communication system according to claim 1 or 2, wherein an overlap range is provided where a communicable range connectable to the one gate and a communicable range connectable to the other gate overlap with each other, and all the connections of said plurality of terminals are switched within a time period in which said plurality of terminals exist in said overlap range.

4. The subnet connection switching communication system according to any one of claims 1 to 3, wherein said plurality of terminals are located in a mobile body to move with said mobile body.

5. The subnet connection switching communication system according to claim 4, wherein said mobile body includes external communication means for making communication with the one gate or the other gate and internal communication means for making communications with said plurality of terminals,
said plurality of terminals making the connections through said external communication means and said internal communication means with the one gate or the other gate.

6. The subnet connection switching communication system according to claim 4 or 5, wherein said mobile body is a train including a plurality of cars, and a plurality of terminals located in at least one of said plurality of cars are set as one of said groups, and the grouping is made with said each car.
